# EUROPÄISCHE PATENTSCHRIFT

(11) **EP 1 668 819 B1**
(45) Veröffentlichungstag und Bekanntmachung des Hinweises auf die Patenterteilung: **20.10.2010**
(21) Anmeldenummer: 04766611.0
(22) Anmeldetag: 26.08.2004
(51) Int. Cl.: H04L 12/14, H04W 4/00

(54) **KOMMUNIKATIONSVERFAHREN UND SYSTEM**
COMMUNICATION METHOD AND DEVICE
PROCEDE DE COMMUNICATION ET SYSTEME

(30) Priorität: 29.09.2003 DE 10345219
(43) Veröffentlichungstag der Anmeldung: 14.06.2006
(73) Patentinhaber: SIEMENS AKTIENGESELLSCHAFT, 80333 München (DE)
(72) Erfinder: HANS, Martin, 31162 Bad Salzdetfurth/Heinde (DE); SCHMIDT, Andreas, 38124 Braunschweig (DE); SCHMIDT, Holger, 38102 Braunschweig (DE)
(86) Internationale Anmeldenummer: PCT/EP2004/051922
(87) Internationale Veröffentlichungsnummer: WO 2005/034426

(56) Entgegenhaltungen:
- EP-A- 1 239 651
- US-A- 6 157 709
- US-A1- 2002 098 827
- US-A1- 2003 002 639
- US-B1- 6 192 115
- US-B1- 6 570 973

## Beschreibung

Die Erfindung betrifft ein Kommunikationsverfahren und ein System, das eine Kommunikation zwischen mindestens zwei Teilnehmern ermöglicht.

In bekannter Weise werden Systeme zur Kommunikation zwischen mindestens zwei Teilnehmern zum Austausch von Daten miteinander verbunden und unter Verwirklichung der unterschiedlichsten Kommunikationsstandards betrieben. Dabei werden unter dem Begriff Daten alle Formen von Daten verstanden, also insbesondere Sprach-, Musik-, Ton-, Text- und/oder Bilddaten.

Im Gebiet der Bundesrepublik Deutschland wurde am 01.11.2002 die Rufnummernportabilität MNP gesetzlich eingeführt. Die Rufnummernportabilität stellt sicher, dass Mobilfunkteilnehmer beim Wechsel eines jeweiligen Netzbetreibers und/oder eines Kommunikationsstandards (GSM, UMTS, etc.) ihre Mobilfunkrufnummer MSISDN behalten bzw. mitnehmen können. Der Teilnehmer ist somit weiterhin mit seiner alten MSISDN adressierbar, obwohl er den Mobilfunknetzbetreiber gewechselt hat. Der Netzbetreiber, dem ein Rufnummernblock (z.B. 171XXX) zugeordnet ist, abgekürzt als NRHNet, übernimmt für die Teilnehmer, deren MSISDN in diesem Adressbereich liegen, somit nicht mehr automatisch die Rolle des "Home Public Land Mobile Networks", abgekürzt als H-PLMN. Die Netzvorwahl, z.B. 171 für T-Mobile, wird auch "National Destination Code" genannt, kurz NDC. Der NDC identifiziert aufgrund der Rufnummernportabilität MNP nicht mehr wie bisher eindeutig das H-PLMN des Teilnehmers.

Es ist Aufgabe der vorliegenden Erfindung, ein Kommunikationsverfahren und ein System der eingangs beschriebenen Art dahingehend zu verbessern, dass der Bedienkomfort für einen Anrufer erhöht wird.

Diese Aufgabe wird durch ein Verfahren gemäß Patentanspruch 1 und durch ein System gemäß Patentanspruch 10 gelöst.

Aufgrund der aktuellen Kostenstruktur existieren oft enorme Tarifunterschiede, abhängig davon, welchem Mobilfunknetz die Teilnehmer angehören. Bei vielen Preismodellen sind netzinterne Telefonate wesentlich günstiger als ein Gespräch in ein Fremdnetz. In einigen Tarifen gibt es auch Preisunterschiede zwischen den verschiedenen Fremdnetzen. Für den Anrufenden ist es daher sehr wichtig zu wissen, welchem Mobilfunknetz sein Gesprächspartner zugeordnet ist bzw. welches Mobilfunknetz sein H-PLMN ist. Wie vorstehend erläutert, ist die eineindeutige Abbildung des NDC auf ein H-PLMN aufgrund der Einführung der Rufnummernportabilität nun nicht mehr gegeben. Gerade die Mobilfunkkunden sind es aber seit langen Jahren gewohnt, diese Information aus der MSISDN abzuleiten und ihr Nutzerverhalten entsprechend anpassen zu können. Beim weiteren Fortschreiten eines freien Wettbewerbs auf allen Bereichen der drahtlosen und drahtgebundenen Kommunikation wird sich das bislang nur aus dem Mobilfunk-Bereich bekannte Verhalten noch ausweiten.

Erfindungsgemäß wird zur Lösung der vorstehenden Aufgabe beim Aufbau einer Verbindung der Netzbetreiber eines angewählten Teilnehmers bestimmt und diese Information an den jeweiligen Anrufer zur Kenntnisnahme übertragen. Im Rahmen der vorliegenden Erfindung wird also ein Verfahren beschrieben, das den vorstehend beschriebenen Informationsverlust wieder ausgleicht und den Anrufenden in komfortabler und nutzerfreundlicher Art und Weise über die Netzzugehörigkeit des Angerufenen informiert, d.h. Auskunft über das H-PLMN des angerufenen Kommunikationspartners erteilt.

Aus dem Stand der Technik sind Verfahren zur Signalisierung eines Nachrichtenempfängers u.a. aus der EP 0 818 913 A2 [1] bekannt. Hierin wird diese Maßnahme bei Darstellung der Identität eines jeweiligen Nachrichtenempfängers nur zur Verhinderung einer Fehlverbindung genutzt. Eine Bestimmung einer Netzwerkzugehörigkeit des Nachrichtenempfängers ist nicht vorgesehen.

Ähnlich erhält es sich bei der Offenbarung der WO0186973 A2 [2]: Hier wird ein WAP-Nutzer über die Identität eines Service Providers für einen WAP-Server informiert. Anders im Fall der vorliegenden Erfindung, die eine Ermittelung und Übertragung der Identität des HPLMN des gerufenen Nachrichtenempfängers vorsieht.

US 2003/002639 offenbart ein Verfahren im dem die Information, dass eine Rufnummer portiert ist an den Netzbetreiber des Anrufers übermittelt wird.

Weitere Lösungen zur Ermittlung und Anzeige von Informationen zu einem gewünschten Kommunikationspartner existieren in den folgenden Bereichen:
■ Abfrage der Netzzugehörigkeit über eine Servicerufnummer. Nach der Anwahl der netzspezifischen Servicerufnummer und der Eingabe der abzufragenden MSISDN wird die Netzzugehörigkeit des entsprechenden Teilnehmers ermittelt und dem Abfragenden angesagt.
■ Abfrage der Netzzugehörigkeit über ein WAP-Portal Mit Hilfe des WAP-Browsers und der Eingabe der abzufragenden MSISDN wird über das entsprechend dafür eingerichtete WAP-Portal die Netzzugehörigkeit ermittelt und angezeigt.
■ Abfrage der Netzzugehörigkeit über einen SMS Dienst Nach dem Versenden einer geeignet formatierten und an eine netzspezifische Servicerufnummer gerichteten SMS wird die Netzzugehörigkeit des Angerufenen dem Abfragenden mittels einer Antwort-SMS mitgeteilt.

Nachteilig ist bei allen letztgenannten Lösungen jedoch, dass vor dem Aufbau der eigentlich gewünschten Verbindung ein anderer Service in Anspruch genommen werden muss. Dieses Prinzip ist besonders nachteilig, weil es von dem Anrufenden einen zusätzlichen Aufwand erfordert und in einigen Fällen recht zeitintensiv sein kann und/oder zusätzliche Kosten verursacht.

Gerade in der Einführung eines im Rufaufbau integrierten Signalisierungsverfahrens zur Benachrichtigung des die Verbindung initiierenden Teilnehmers über die Netzzugehörigkeit des angerufenen Teilnehmers liegen gegenüber bekannten Lösungen Zeit- und Kostenvorteile. Aufgrund des generischen Konzeptes ist das erfindungsgemäße Verfahren ferner in verschiedenen Architekturen zur MNP anwendbar, wie nachfolgend unter Bezugnahme auf die Zeichnungen noch ausgeführt wird.

Die weiteren abhängigen Ansprüche enthalten jeweils besonders vorteilhafte Ausgestaltungen und Weiterbildungen der Erfindung. So wird bei einem bevorzugten Ausführungsbeispiel der Erfindung beim Rufaufbau und vor dem Zustandekommen einer Verbindung festgestellt, ob der angewählte Teilnehmer, d.h. seine MSISDN, aktuell zu einem anderen Betreiber eines Kommunikationsnetzes portiert wurde, d.h. das NRHNet nicht identisch ist mit dem H-PLMN. Falls dem so ist, so wird der jeweilige Betreiber bzw. das H-PLMN identifiziert. Damit kann in einer Weiterbildung der Erfindung unter Kenntnis der jeweiligen H-PLMNs der beteiligten Kommunikationspartner durch einen Anrufer aktiv über die Fortsetzung oder den Abbruch der Kommunikationsverbindung entschieden werden.

In einer Weiterbildung der Erfindung wird einem Anrufer unter Kenntnis der Mobilfunknetzbetreiber der jeweilig beteiligten Kommunikationspartner, d.h. ihrer Netzzugehörigkeit, eine Entscheidung über die Fortsetzung oder den Abbruch einer Kommunikationsverbindung gegeben. Wahlweise kann hiernach eine Bestätigung des Empfangs der Portierungsinformation durch den Anrufer vorgesehen sein, die für weiterführende Aufgaben, wie z.B. zur Tarifierung der Ermittlung der Netzzugehörigkeit des angerufenen Kommunikationspartners, verwendet werden kann. Da für einen Nachrichtenempfänger jedoch in der Regel mehr als nur eine Kennung oder Telefonnummer zur Verfügung steht, so kann nach einer Ausführungsform der Erfindung alternativ ein weiterer Versuch zum Verbindungsaufbau unter Nutzung einer anderen Nummer des gewünschten Kommunikationspartners unternommen werden. Eine Wahl einer derartigen Alternativnummer kann dann automatisch aus einem Adressbuch in einem Teilnehmer-Endgerät oder einem sonstigen zentralen Register erfolgen. Vorzugsweise wird ein Verbindungsaufbau unter Verwendung eines Timers automatisch nach dessen Ablauf fortgesetzt, sofern kein expliziter Abbruch eines Verbindungsaufbaus durch den Anrufer erfolgt.

Vorzugsweise wird ein derartiges Verfahren einer erfindungsgemäßen Kompensation des durch die Einführung der Rufnummernportabilität hervorgerufenen Informationsverlustes im Mobilfunksektor angewendet, da gerade hier die i.d.R. weggefallene oder sehr unsichere Identifikation hohe Kostenfolgen haben kann. Während des Verbindungsaufbaus zu einem angewählten Teilnehmer wird daher die Netzzugehörigkeit des angerufenen Teilnehmers untersucht. Eine jeweilige Information kann wahlweise in einem Display des Anrufes angezeigt oder als Ansage kenntlich gemacht werden.

In einer Weiterbildung der Erfindung wird die erhaltene Information, die Netzzugehörigkeit des angerufenen Teilnehmers, in einem Telefon- und/oder Adressbuch gespeichert. Damit kann eine evtl. kostenpflichtige erneute Anfrage umgangen werden, solange ein derartiger Eintrag nicht veraltet ist. Zur Sicherung der Datenzuverlässigkeit wird eine Speicherung insbesondere unter Angabe eines Abrufzeitpunktes durchgeführt.

In einer Ausführungsform der Erfindung wird eine jeweilige Konstellation von Netzbetreiber oder Dienstanbieter des Anrufers und Dienstanbieter des jeweilig Angerufenen in einer Datenbank ausgewertet. Aufgrund der immer weiter anwachsenden Vielfalt von Anbietern und verschiedensten Tarifen und Tarifstrukturen mit Orts- und/oder Tageszeitabhängigkeiten etc. kann ein Endverbraucher auch bei nun bekannter Konstellation der jeweiligen Anbieter nicht in jedem Fall einen für diesen Fall optimalen Tarif kennen. Es wird daher dem oder den jeweils zur Zahlung verpflichteten Personen eine Kostenabschätzung bekannt gegeben. Diese Abschätzung kann einer aktuellen Konstellation entsprechend unter Angabe unterschiedlicher normierter Gesprächskosten, wie z.B. Kosten pro Minute o.ä., vorgenommen werden. Falls beide Gesprächspartner bei ein und dem selben Dienstanbieter vertraglich gebunden sind, so kann durch diesen Dienstanbieter automatisiert, dabei aber personalisiert, auf einen oder mehrere besondere Tarife hingewiesen werden. Hier sind Partner- und Freundschaftstarife oder besondere Anrufzeiten mit Verbilligungen bekannt geworden. Diese Information kann nach Auswahl durch den Anrufenden gegeben werden, um als Störung empfundene Überhäufungen an Informationen zu vermeiden. Insgesamt kann durch diese Maßnahmen eine Kundenbindung an einen Dienstanbieter gestärkt werden.

Die Erfindung wird im Folgenden unter Hinweis auf die beigefügten Figuren anhand von Ausführungsbeispielen näher erläutert. Es zeigen:
- Figur 1: eine Prinzip-Darstellung der aus dem Stand der Tech- nik bekannten Struktur der "Mobile Subscriber ISDN Number", kurz MSISDN,
- Figur 2: einen schematischen Ablauf einer erfindungsgemäßen Signalisierung innerhalb des Rufaufbaus (Connection Set-up),
- Figur 3: eine schematische Darstellung des Ablaufs eines er- findungsgemäßen Verfahrens innerhalb der Call Drop- back Architektur zur MNP als erstes Ausführungsbei- spiel,
- Figur 4: eine schematische Darstellung des Ablaufs eines er- findungsgemäßen Verfahrens innerhalb der Query on Re- lease Architektur zur MNP als zweites Ausführungsbei- spiel,

- Figur 5: eine schematische Darstellung eines Ausführungsbei- spiels eines schematischen Ablaufs eines erfindungs- gemäßen Verfahrens innerhalb der All Call Query Ar- chitektur zur MNP als drittes Ausführungsbeispiel und
- Figur 6: zwei Beispiele für die Erweiterung eines Telefon- bzw. Adressbucheintrages durch Anzeige der aktuellen Netzzugehörigkeit.

In den Figuren und den weiteren Erläuterungen wird davon ausgegangen, dass eine Kommunikationsverbindung zwischen Mobiltelefonen in einem Mobilfunksystem, welches nach einem Kommunikationsstandard wie GSM, UMTS, usw. arbeitet, aufgebaut wird. Gleiche Funktionsblöcke etc. werden einheitlich bezeichnet. Die verwendete Nomenklatur wurde an die eines Fachmanns aus diesem Bereich angeglichen, so dass auf eine Übersetzung von geläufigen Fachwörtern englischen Ursprungs in das Deutsche verzichtet wurde. Wie vorstehend erläutert, ist die Erfindung aber nicht auf Anwendungsfälle einer Kommunikation zwischen Mobiltelefonen bzw. Mobilfunkgeräten der dargestellten Art beschränkt.

Für die Realisierung der seit dem 01.11.2002 im Gebiet der Bundesrepublik Deutschland vorgeschriebenen Möglichkeit einer Rufnummernportabilität sind eine Reihe von Implementierungsvarianten bekannt, siehe [6]. Diese Varianten unterscheiden sich in der Netzwerkarchitektur und der notwendigen Signalisierung zur Realisierung der Rufnummernportabilität. Unabhängig von der eingesetzten Architektur sind dabei grundsätzlich zwei Aufgaben zu unterscheiden, die gelöst werden müssen: Erstens muss festgestellt werden, dass der entsprechende Teilnehmer portiert wurde, und zweitens muss das neue Mobilfunknetz, in das der Teilnehmer portiert wurde, d.h. das aktuelle H-PLMN, detektiert werden und jeweils die Verbindung zwischen den anrufenden und den angerufenen Teilnehmern hergestellt bzw. vermittelt werden.

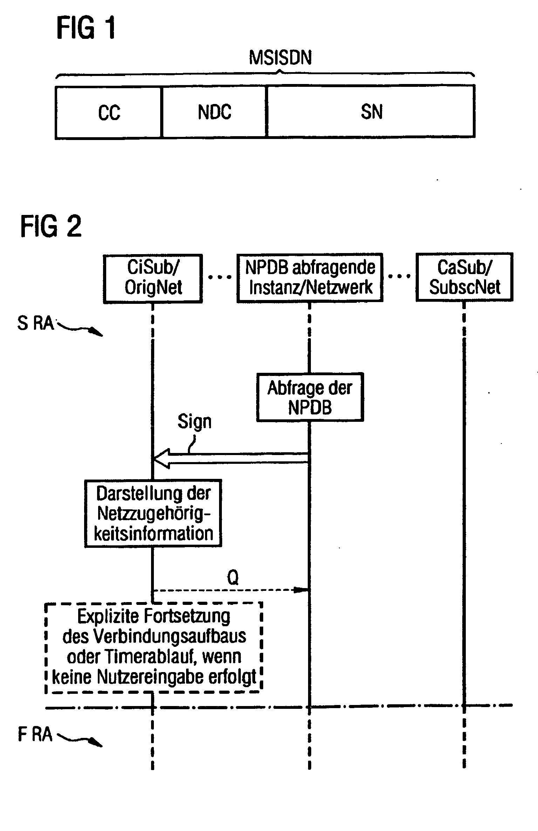

Die erste Aufgabe kann mit Hilfe einer HLR-Abfrage in dem Mobilfunknetz, dem der Rufnummernblock der MSISDN zugeordnet ist, d.h. dem Netz, dem ursprünglich die MSISDN zugeordnet war, gelöst werden. Ist eine MSISDN des Rufnummernblockbesitzers portiert worden, so enthält das HLR keinen Eintrag mehr für die entsprechende MSISDN. Weiterhin kann die erste Aufgabe auch mit der Abfrage einer Datenbank, der sogenannten "Number Portability Database" NPDB nach [4], [5], [6] bewältigt werden: Findet sich in der NPDB ein entsprechender Eintrag für die MSISDN, dann wurde die MSISDN portiert. Der NDC als Teil der MSISDN mit Länderkennung bzw. "Country Code" CC und Teilnehmernummer bzw. "Subscriber Number" SN, siehe Figur 1 und [3], identifiziert aufgrund der Rufnummernportabilität MNP das H-PLMN des Teilnehmers nicht mehr eindeutig.

Zur Lösung der zweiten Aufgabe, der Detektion des aktuellen H-PLMN, wird ebenfalls die "Number Portability Database" NPDB nach [4], [5], [6] verwendet. In dieser Datenbank wird für jede portierte MSISDN, d.h. in der Regel für jeden portierten Teilnehmer, ein Eintrag angelegt. Dieser Eintrag enthält Informationen über die aktuelle Netzzugehörigkeit des Teilnehmers, um die Verbindung zum H-PLMN zu routen. Die "Re-routing Information" kann als Einträge in der sog. "Routing Number" RN folgendes enthalten: "ISUP Called Party Number" (call related) und "SCCP Called Pary Address" (non-call related), die damit angibt, welchem H-PLMN aktuell die MSISDN zugeordnet ist. Alternativ kann die "Routing Number" RN das HLR im H-PLMN adressieren.

Es besteht die Möglichkeit, dass jeder Mobilfunknetzbetreiber eine eigene NPDB aufbaut und betreibt. Dies hat jedoch einige Nachteile, da damit ein größerer administrativer Aufwand bei der Pflege der Datenbanken zur Sicherstellung der Konsistenz, Aktualisierung, etc. einhergeht. Die einzelnen NPDB der Mobilfunknetzbetreiber könnten weiterhin nur die portierten MSISDN der eigenen Rufnummernblöcke enthalten oder die länderspezifische Gesamtheit der portierten MSISDN. Aufgrund dieser Nachteile wird z.B. in Deutschland der Aufbau und die Verwendung einer zentralen und länderspezifischen NPDB favorisiert. Diese Datenbank enthält somit für alle im jeweiligen Land portierten MSISDN jeweils einen Eintrag.

Aus der vorstehend beschriebenen Lösung der beiden Aufgaben wird erkenntlich, dass die Abfrage der NPDB auf jeden Fall erfolgen muss, sofern die MSISDN in ein anderes Mobilfunknetz portiert wurde.

Aus der Kombination der beschriebenen Varianten
- eine NPDB pro Mobilfunknetz mit netzspezifischen Einträgen,
- eine NPDB pro Mobilfunknetz mit länderspezifischen Einträgen,
- eine länderspezifische NPDB und
- HLR Abfrage des Rufnummernblockbesitzers), d.h. welche Datenbanken in welcher Reihenfolge abgefragt werden, ergeben sich die in [6] beschriebenen Architekturen bzw. Implementierungsvarianten.

Ein wesentlicher Punkt der vorliegenden Erfindung ist die Einführung einer Signalisierungsnachricht Sign zwischen dem Netzwerk bzw. einem bestimmten Netzwerkelement, das die NPDB abfragt, um die Netzzugehörigkeit der MSISDN festzustellen und dem die Verbindung initiierenden Teilnehmer CiSub, siehe Figur 2. Dieses Verfahren greift während des Rufaufbaus S RA ein. Mit dieser Signalisierungsinformation Sign wird der rufende Teilnehmer CiSub über die aktuelle Netzzugehörigkeit SubscNet des gerufenen Teilnehmers CaSub informiert.

Optional kann erfindungsgemäß vom rufenden Teilnehmer CiSub eine Bestätigung Q des Empfangs der Netzzugehörigkeitsinformation an das die NPDB abfragende Netzwerk gesendet werden. Daran anschließend kann eine Fortsetzung des Rufaufbaus F RA veranlasst werden. Diese Bestätigung kann zur Auslösung von weiterführenden Aufgaben und/oder Aktionen dienen. Eine derartige Aufgabe besteht in einem Ausführungsbeispiel in einer Tarifierung dieses Dienstes.

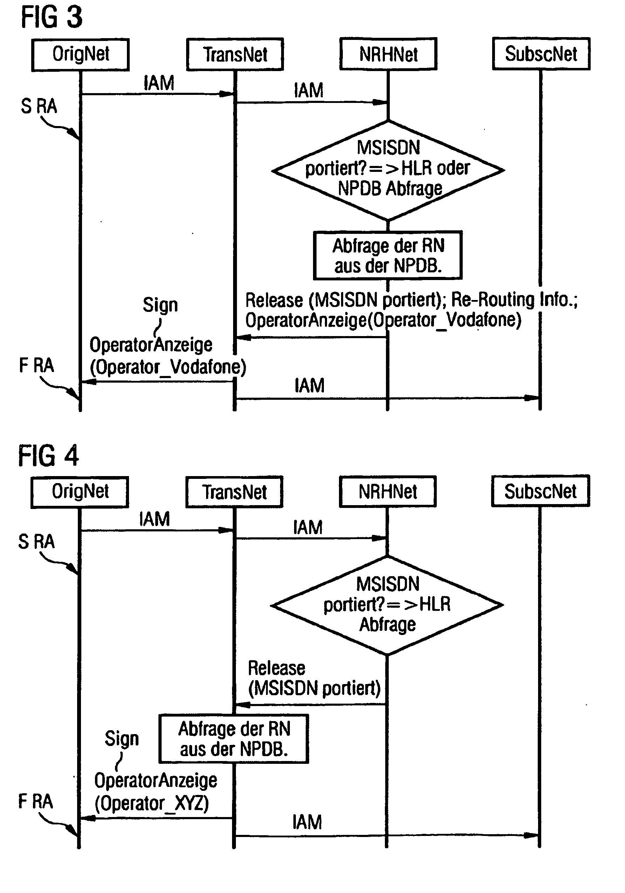

Nach der Kenntnis der Netzzugehörigkeit des angerufenen Teilnehmers kann der anrufende Teilnehmer erfindungsgemäß den Verbindungsaufbau abbrechen. Das erfolgt nach nicht weiter dargestellten Ausführungsbeispielen der Erfindung durch Betätigen einer Taste oder eines Softkeys an einem Teilnehmer-Endgerät UE. Damit wird eine konkret gestellte Frage der Form "Verbindungsaufbau fortsetzen?" gestellt, die mit Ja/Nein entschieden wird. Bei der Auswahl "Nein" kann automatisch eine weitere Nummer eines jeweils gewünschten Teilnehmers aus einem Telefonbuch des UE ausgelesen werden, und das Verfahren beginnt von Neuem. In dem vorstehenden Szenario ist beim Abbruch des Verbindungsaufbaus eine "Release"-Nachricht von dem UE an das Netzwerk zu senden, das dem UE die Netzzugehörigkeit des angerufenen Teilnehmers signalisiert hat. Das ist in der Skizze von Figur 4 nicht weiter dargestellt.

Besonders vorteilhaft ist in diesem Zusammenhang die Einführung eines Timers. Erfolgt kein expliziter Abbruch oder eine explizite Fortsetzung des Verbindungsaufbaus durch den Teilnehmer, so wird nach dem Ablauf des Timers der Verbindungsaufbau automatisch fortgesetzt, siehe Figur 4.

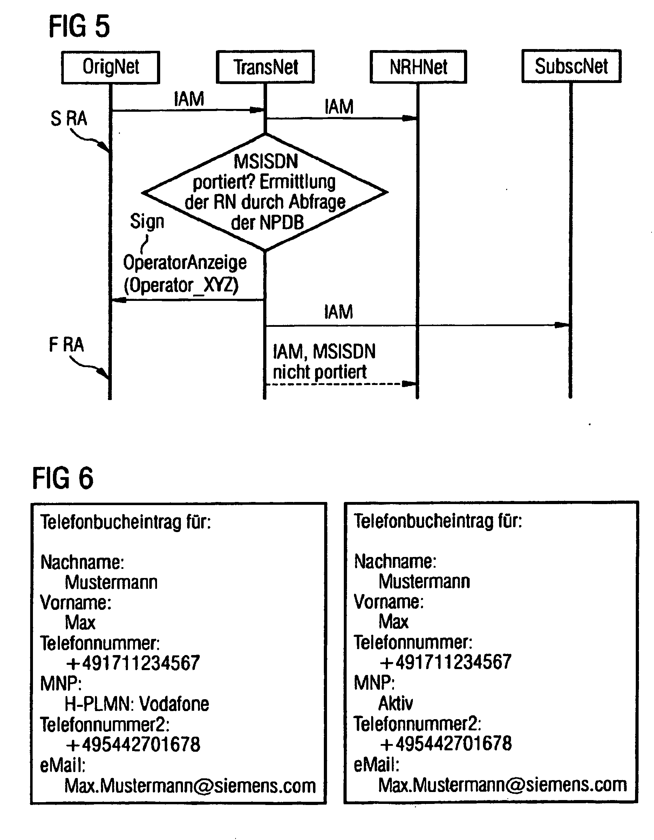

Die im UE gespeicherten Telefon- und Adressbucheinträge werden mit der empfangenen Netzzugehörigkeitsinformation erweitert, wie in Figur 6 skizziert dargestellt. Wird die Netzzugehörigkeit eines im Telefon- bzw. Adressbuch gespeicherten Teilnehmers ermittelt, so wird der entsprechende Eintrag vorteilhaft durch die Angabe des aktuellen H-PLMN des Teilnehmers ergänzt. Jede erneute Ermittlung der Netzzugehörigkeit führt zu einer Aktualisierung des Eintrags. Um ein Überaltern dieser Information zu verhindern, wird eine Verfallszeit für eine notwendige Aktualisierung dieser Information vorgesehen, nach der die Netzzugehörigkeit erneut abgefragt wird. Als Alternative oder Ergänzung kann ebenfalls der letztmalige Abfragezeitpunkt mit abgespeichert werden, z.B. im Format: Tag/Monat/Jahr. Alternativ kann diese Netzzugehörigkeitsinformation auch in einer weniger detaillierteren Form angegeben werden. Dies kann durch die Angabe erfolgen, dass für diesen Teilnehmer bei der letzten Verbindung die MNP aktiv war, ohne das H-PLMN exakt zu spezifizieren. Eine genaue Angabe wird gegen ein zusätzliches Entgelt angegeben oder ist Merkmal eines Premium-Dienstes.

Die Information über die Netzzugehörigkeit des gerufenen Teilnehmers kann dem rufenden Teilnehmer erfindungsgemäß auf verschiedene Weisen dargestellt werden, wobei die mittels Sign empfangene Nachricht auf eine für den Nutzer verständliche Nachrichtenform abgebildet wird, siehe Figur 2. Bei den empfangenen Nachrichten kann es sich z.B. um H-PLMN-Identifikator, "Re-Routing"-Information, etc. handeln. Hier bietet sich z.B. eine Abbildung des NDC 172 auf den Providernamen "Vodafone" u.s.w. an, so dass folgende AnzeigeMöglichkeiten realisiert werden:
- Anzeige der Mobilfunknetzzugehörigkeit im Display, z.B. "Der gewünschte Teilnehmer ist dem Mobilfunknetz XY zugeordnet" oder "MNP aktiv: Es wird eine Verbindung zum Netz XY hergestellt".
- Endgeräte- und nutzerspezifische Ansage der Netzzugehörigkeit während des Verbindungsaufbaus, da eine entsprechende Anzeige im Display u.U. nicht bemerkt wird.
- Beliebiges akustisches Signal (beispielsweise Piepton von vorher vereinbarter Tonhöhe und Dauer), das angibt, dass die MNP aktiv ist, und die Verbindung in ein anderes Mobilfunknetz umgeleitet wird.
- Kombinationen von optischer und akustischer Anzeige

Folgende Vorteile weist ein erfindungsgemäßes Verfahren zur Signalisierung der Netzzugehörigkeit des angerufenen Teilnehmers u.a. auf:
■ Die zum Rufaufbau ohnehin notwendige Ermittlung der Netzzugehörigkeit des angerufenen Teilnehmers wird genutzt, um den rufenden Teilnehmer diese Information zur Verfügung zu stellen;
■ Zur Ermittlung der Netzzugehörigkeit ist keine separate Aktion von dem die Verbindung initiierenden Teilnehmer auszuführen, wie es zur Zeit gemäß dem zitierten Stand der Technik notwendig ist;
■ Das erfindungsgemäße Verfahren ist in den Rufaufbau integriert;
■ Die Information über die Netzzugehörigkeit des angerufenen Teilnehmers kann dem rufenden Teilnehmer automatisch zugestellt werden, d.h., ohne Beschränkung der Allgemeinheit, dass die Ermittlung der Netzzugehörigkeit nicht für jede Verbindung neu aktiviert werden muss;
■ Das erfindungsgemäße Verfahren ist für jede bekannte und in [6] beschriebene Architektur bzw. Implementierungsvariante anwendbar, siehe auch nachfolgend beschriebene Ausführungsbeispiele;
■ Die Ermittlung der Netzzugehörigkeit kann ohne die vollständige Herstellung einer Verbindung erfolgen, d.h. der Nutzer kann den Verbindungsaufbau nach der Bekanntgabe der Netzzugehörigkeit abbrechen;
■ Durch die Einführung eines Timers kann der Verbindungsaufbau nach Abfrage der Datenbank automatisch fortgesetzt werden, sofern kein expliziter Abbruch erfolgt;
■ Das Verfahren zeichnet sich durch seine Nutzerfreundlichkeit aus;
■ Die Möglichkeit einer Tarifierung des erfindungsgemäßen Verfahrens obliegt dem jeweiligen Mobilfunknetzbetreiber, wobei eine Auswertung der Empfangsbestätigung Q der Tarifierung vorangestellt werden kann;
■ Die Netzzugehörigkeit wird in einem Telefon- bzw. Adressbuch gespeichert, so dass der Nutzer stets über das H-PLMN eines Teilnehmers und eventuelle Gesprächskosten informiert ist.

Im folgenden werden für drei ausgewählte Architekturen zur MNP nach [6] konkrete Beispiele angegeben, wie das erfindungsgemäße Verfahren in diese Implementierungsvarianten integriert werden kann. Dabei werden nicht alle vorstehend als Weiterbildungen dieser Erfindung angegebenen vorteilhaften Merkmale berücksichtigt. Diese können aber ebenfalls problemlos integriert werden. Weiterhin ist es nach der Kenntnis der angegebenen Ausführungsbeispiele problemlos möglich, das erfindungsgemäße Verfahren auch auf andere Architekturen zur MNP zu übertragen.

### 1. Ausführungsbeispiel

In der als "Call Dropback" bezeichneten Architektur wird ein Ruf erst von einem Netzwerk OrigNet, in dem sich der die Verbindung initiierende Teilnehmer befindet, und unter Umständen über ein Transitnetzwerk TransNet zu dem Mobilfunknetz NRHNet geroutet, dem der Rufnummernblock der gewähltem MSISDN zugeordnet ist, siehe Figur 3. Dieses Netzwerk, dem die MSISDN ursprünglich zugeordnet war, wird im folgenden als NRHNet abgekürzt. Wählt ein Teilnehmer beispielsweise die Rufnummer +491711234567, so wird die Verbindung zum Mobilfunknetz von T-Mobile geroutet. Nach Figur 1 gilt dann NDC=171. Der Ruf wird dabei durch die Übertragung der "Initial Address Message" bzw. IAM-Nachricht signalisiert [7]. Im NRHNet wird nun geprüft, ob die in der IAM enthaltene MSISDN portiert wurde, oder ob das nicht geschehen ist. Wie Eingangs beschrieben wurde, so kann dies durch die Abfrage des HLR oder der NPDB erfolgen. Wurde zuerst eine HLR-Abfrage durchgeführt und festgestellt, dass die MSISDN portiert wurde, so wird spätestens jetzt die NPDB abgefragt. Damit wird das Mobilfunknetz bestimmt, in das die MSISDN portiert wurde, d.h. es wird bestimmt, in welchem PLMN sich das HLR der MSISDN befindet. Die NPDB liefert gleichzeitig, wie zum Stand der Technik beschrieben, die "Re-routing"-Information. Die "Re-routing"-Information ist notwendig, um den Ruf an das aktuelle H-PLMN der MSISDN umzuleiten. In dieser Implementierungsvariante sendet das NRHNet jetzt eine "Release"-Nachricht mit der Angabe, dass die MSISDN portiert wurde, und die notwendige "Re-Routing"-Information an das Transitnetzwerk TransNet.

Erfindungsgemäß wird dabei, abgeleitet z.B. aus der RN, die Netzzugehörigkeit des gerufenen Teilnehmers an den rufenden Teilnehmer signalisiert und dem Teilnehmer auf seinem Endgerät geeignet dargestellt. In dem in Figur 3 gezeigten Beispiel wird die Übertragung dieser Information durch "OperatorAnzeige(Operator_Vodafone)" symbolisiert. Das Transitnetzwerk interpretiert die "Re-Routing"-Information und leitet den Ruf IAM an das H-PLMN SubcNet weiter.

### 2. Ausführungsbeispiel

Die mit "Query on Release" bezeichnete Implementierungsvariante ähnelt der "Call Dropback" Architektur. Der Ruf wird wieder, wie in Abbildung 4 angegeben, zum NRHNet geroutet. Dort wird wieder durch die Abfrage vorzugsweise des netzeigenen HLR geprüft, ob die MSISDN portiert wurde. Alternativ wird eine Abfrage der NPDB realisiert, hier aber nicht weiter ausgeführt. Im Gegensatz zur "Call Dropback"-Architektur wird jetzt aber keine "Re-Routing"-Information RN an das Transitnetz übertragen. Aus diesem Grund muss das NRHNet auch keine NPDB für die aus ihrem Rufnummernblock portierten MSISDN enthalten. Es ist nun die Aufgabe des Transitnetzwerkes, die NPDB abzufragen und das H-PLMN des gerufenen Teilnehmers zu ermitteln. Der Ermittlung des H-PLMN durch das TransNet schließt sich wieder das erfindungsgemäße Verfahren zur Signalisierung der Netzzugehörigkeit des angerufenen Teilnehmers durch "OperatorAnzeige(Operator_XYZ)", wie in Abbildung 4 angegeben, an. Das Transitnetzwerk interpretiert wieder die "Re-Routing"-Information und leitetet den Ruf IAM an das H-PLMN SubcNet weiter.

### 3. Ausführungsbeispiel

Die mit "All Call Query" bezeichnete Architektur unterscheidet sich von den bisher erläuterten Architekturen in dem Punkt, dass der Ruf nicht zum NRHNet geroutet wird, siehe Figur 5. Das Transitnetz fragt unmittelbar nach dem Erhalt der IAM die NPDB ab. Wie auch in den beiden vorangehenden Ausführungsbeispielen schließt sich bei einer portierten MSISDN daran das erfindungsgemäße Verfahren zur Signalisierung der Netzzugehörigkeit des angerufenen Teilnehmers an. Wurde die MSISDN portiert, so routet das TransNet den Ruf an das aktuelle H-PLMN. Ist die MSISDN nicht portiert worden, dann wird der rufende Teilnehmer nicht über die Netzzugehörigkeit informiert und der Ruf wird zum NRHNet geroutet, der in diesem Fall identisch mit den SubscNet ist. In einem nicht weiter dargestellten Ausführungsbeispiel der Erfindung erfolgt auch in dem Fall eine Information über die Netzzugehörigkeit des gerufenen Teilnehmers, wenn die MSISDN nicht portiert worden ist.

Es bietet sich im Übrigen an, bestehende Systeme, welche bereits strukturell die entsprechenden Mittel aufweisen, zu erfindungsgemäßen Systemen nachzurüsten. Damit können auch diese Systeme gemäß einem erfindungsgemäßen Verfahren genutzt werden. Gegebenenfalls reicht hierzu bereits ein Update der Steuerungssoftware mit geeigneten Steuerungs-Softwaremodulen aus.

Offenbart ist ein Verfahren zum Aufbau einer Kommunikationsverbindung von einer ersten Mobilstation bzw. einem ersten Teilnehmer-Endgerät (CiSub) eines (rufenden) ersten Teilnehmers zu einer zweiten Mobilstation bzw. einem zweiten Teilnehmer-Endgerät (CaSub) eines zweiten (ausgewählten bzw. gerufenen) Teilnehmers zum Austausch von Daten miteinander. Die erste Mobilstation ist dabei in einem ersten Mobilfunknetz (OrigNet) eingebucht, während die zweite Mobilstation in einem zweiten Mobilfunknetz (SubscNet) eingebucht ist. Dabei können die beiden Mobilfunknetze identisch sein. Beim Aufbau der Kommunikationsverbindung wird dabei der (Mobilfunk-) Netzbetreiber bzw. das Mobilfunknetz der zweiten, d.h. der angewählten, Mobilstation bestimmt, wobei diese bestimmte Information (OperatorAzeige(Operator_XYZ)) an die erste, d.h. die den Verbindungsaufbau einleitende oder anrufende, Mobilstation (CiSub) mittels einer Nachricht (Sign) zur Kenntnisnahme übertragen wird. Beispielsweise überträgt der erste Teilnehmer zum initiieren des Aufbaus einer Kommunikationsverbindung über seine Mobilstation die Rufnummer oder Telefonnummer MSISDN des Rufempfängers bzw. zweiten Teilnehmers an das erste Mobilfunknetz, wobei die MSISDN einen "National Destination Code" (NDC) hat, welcher jedoch aufgrund der Rufnummernportabilität nicht mehr eindeutig das zweite Mobilfunknetz bzw. dessen Betreiber identifiziert. Vorteilhafterweise wird somit zu Beginn bzw. während des Verbindungsaufbaus, d.h. vor dem eigentlichen Zustandekommen der Verbindung, ermittelt, ob der angewählte (zweite) Teilnehmer aktuell einem anderen Mobilfunknetz bzw. Mobilfunknetzbetreiber als dem über den mit der Telefonnummer assoziierten NDC angegebenen zugeordnet ist, d.h. ob seine Rufnummer portiert wurde. Im Falle einer Rufnummernportation ist dann das neue Mobilfunknetz, in das der angewählte Teilnehmer portiert wurde, d.h. das aktuelle H-PLMN, zu ermitteln. Dies kann beispielsweise durch Abfrage einer Nummernportabilitätsdatenbank bzw. "Number Portability Database" NPDB geschehen. Anschließend kann dann eine Verbindung zwischen dem anrufenden und dem angerufenen Teilnehmern hergestellt bzw. vermittelt werden.

Im Rahmen der Beschreibung der vorliegenden Erfindung wurde insbesondere auf folgende Literatur Bezug genommen:
[1] EP0818913A2: Call Branding System, AT&T Corp.
[2] W00186973A2: Displaying Service Provider Identity, Nokia
[3] 3GPP TS23003: Numbering, addressing and identification
[4] 3GPP TS 22066: Support of Mobile Number Portability - Stage 1
[5] 3GPP TS 23066: Support of Mobile Number Portability - Stage 2
[6] ETSI TR 101118: Network Aspects (NA); High level network architectures and solutions to support number portability
[7] 3GPP TS 23018: Basic Call Handling

Ferner wurden folgende Abkürzungen verwendet:
- CaSub: Angerufener Teilnehmer
- CC: Country Code
- CiSub: Anrufender Teilnehmer
- F RA: Fortsetzung des Rufaufbaus
- GSM: Global System for Mobile Communications
- HLR: Home Location Register
- H-PLMN: Home Public Land Mobile Number
- IAM: Initial Address Message
- ISDN: Integrated Services Digital Network
- ISUP: ISDN User Part
- MNDB: Master Routing Database
- MNP: Mobile Number Portability
- MSISDN: Mobile Subscriber ISDN Number
- MSRN: Mobile Station Roaming Number
- NDC: National Destination Code
- NPDB: Number Portability Database
- NRHNet: Number Range Holder Network
- OrigNet: Mobilfunknetz in dem sich der anrufende Tln befindet
- PLMN: Public Land Mobile Number
- Q: Empfangsbestätigung
- RN: Routing Number
- S RA: Start Rufaufbau
- SCCP: Signalling connection Control Part
- Sign: Signalisierung einer Netzzugehörigkeit
- SMS: Short Message Service
- SN: Subscriber Number
- SubscNet: Mobilfunknetz in das eine MSISDN portiert wurde, d.h. das SubscNet ist das aktuelle H-PLMN der MSISDN
- Tln: Teilnehmer
- TransNet: Transit Netzwerk ist ein Netzwerk zwischen zwei Netz- werken (z.B. zwischen OrigNet und SubscNet)
- UE: User Equipment eines Tln
- UMTS: Universal Mobile Telecommunication System
- WAP: Wireless Application Protocol

## Patentansprüche

1. Kommunikationsverfahren, durch das mindestens zwei Teilnehmer zum Austausch von Daten miteinander verbunden werden, wobei
- bei Aufbau einer Verbindung der Netzbetreiber eines angewählten Teilnehmers bestimmt und dabei zu Beginn des Verbindungsaufbaus und vor dem Zustandekommen einer Verbindung festgestellt wird, ob der angewählte Teilnehmer aktuell einem anderen Netzbetreiber als dem über den mit der Telefonnummer assoziierten Rufnummernblock angegebenen zugeordnet ist, d.h. seine Rufnummer zu einem anderen Netzbetreiber portiert ist, **dadurch gekennzeichnet, dass** diese Information über den anderen Netzbetreiber an den jeweiligen Anrufer zur Kenntnisnahme und zur Entscheidung über die Fortsetzung oder den Abbruch des Aufbaus der Verbindung übertragen wird.

2. Verfahren nach dem vorhergehenden Anspruch, **dadurch gekennzeichnet, dass** unter Kenntnis von als Mobilfunknetzbetreiber ausgebildeten Netzbetreiber der jeweilig beteiligten Kommunikationspartner, d.h. ihrer Netzzugehörigkeit, einem Anrufer eine Entscheidung über die Fortsetzung oder den Abbruch einer Kommunikationsverbindung gegeben wird.

3. Verfahren nach dem vorhergehenden Anspruch, **dadurch gekennzeichnet, dass** im Fall eines Abbruchs einer Kommunikationsverbindung bzw. Verbindungsaufbaus, unter Berücksichtigung der Netzbetreiber der jeweilig beteiligten Kommunikationspartner, automatisch eine weitere Nummer des jeweils gewünschten Teilnehmers aus einem Telefon- und/oder Adressbuch eines Teilnehmer-Endgerätes (UE) ausgelesen wird und ein erneuter Verbindungsaufbau zu dieser Rufnummer gestartet wird.

4. Verfahren nach einem der beiden vorhergehenden Ansprüche, **dadurch gekennzeichnet, dass** unter Verwendung eines Timers
ein Verbindungsaufbau automatisch fortgesetzt wird, sofern kein expliziter Abbruch erfolgt.

5. Verfahren nach einem oder mehreren der vorhergehenden Ansprüche, **dadurch gekennzeichnet, dass** eine Verbindung zu einem angewählten Teilnehmer auf das Vorhandensein eines Betreibers eines Mobilfunknetzes untersucht wird.

6. Verfahren nach einem oder mehreren der vorhergehenden Ansprüche, **dadurch gekennzeichnet, dass** die Information in einem Display des Anrufes angezeigt und/oder als Ansage kenntlich gemacht wird.

7. Verfahren nach einem oder mehreren der vorhergehenden Ansprüche, **dadurch gekennzeichnet, dass** die Information in einem Telefon- und/oder Adressbuch gespeichert wird, insbesondere unter Angabe eines Abrufzeitpunktes.

8. Verfahren nach dem vorhergehenden Anspruch, **dadurch gekennzeichnet, dass** eine jeweilige Konstellation von Netzbetreiber des Anrufers und Netzbetreiber des jeweilig Angerufenen in einer Datenbank ausgewertet wird.

9. Verfahren nach einem der beiden vorhergehenden Ansprüche, **dadurch gekennzeichnet, dass** dem oder den jeweils zur Zahlung verpflichteten Personen eine Kostenabschätzung bekannt gegeben wird.

10. System, das eine Kommunikation zwischen mindestens zwei Teilnehmern ermöglicht, welches Mittel zur Ausführung eines Verfahrens nach einem oder mehreren der vorhergehenden Ansprüche aufweist.

## Claims

1. Communication method, by means of which at least two subscribers are connected to one another to exchange data, whereby
- when setting up a connection, the network operator of a dialled subscriber determines, and it being in this way defined, at the start of the connection set-up and prior to the formation of a connection, whether the dialled subscriber is currently assigned to a network operator other than the one specified by way of the call number block associated with the telephone number, i.e. whether his call number is ported to another network operator, **characterised in that** this information is transmitted via the other network operator to the respective caller for information purposes and for a decision on the continuation or interruption of the set-up of the connection.

2. Method according to the preceding claim, **characterised in that** with knowledge of network operators, embodied as mobile radio network operators, of the respectively participating communication partners, i.e. their network affiliation, a caller is provided with a decision relating to the continuation or the interruption of the communication connection.

3. Method according to the preceding claim, **characterised in that** in the event of an interruption of a communication connection and/or connection set-up, a further number of the respectively desired subscriber is read out from a telephone book and/or address book of a subscriber terminal (UE) and a renewed connection set-up is started to this call number by taking the network operators of the respectively participating communication partners into account.

4. Method according to one of the two preceding claims, **characterised in that** by using a timer, a connection set-up is automatically continued provided no explicit interruption takes place.

5. Method according to one or several of the preceding claims, **characterised in that** a connection to a dialled subscriber is examined for the presence of an operator of a mobile radio network.

6. Method according to one or several of the preceding claims, **characterised in that** the information is displayed in a display of the call and/or made known as an announcement.

7. Method according to one or several of the preceding claims, **characterised in that** the information is stored in a telephone book and/or address book, in particular by specifying a retrieval time.

8. Method according to the preceding claim, **characterised in that** a respective constellation of network operators of the caller and network operators of the respective called party is evaluated in a database.

9. Method according to one of the two preceding claims, **characterised in that** a cost estimation is made known to the person/s obligated to pay.

10. System which enables communication between at least two subscribers, which has means for executing a method as claimed in one or several of the preceding claims.

## Revendications

1. Procédé de communication, par lequel au moins deux abonnés sont reliés l'un à l'autre pour l'échange de données,
- l'exploitant du réseau d'un abonné sélectionné étant déterminé lors de l'établissement d'une liaison et en constatant alors au début de l'établissement de la liaison et avant la survenance d'une liaison si l'abonné sélectionné est attribué actuellement à un autre exploitant de réseau que celui indiqué par le pavé de numéros d' appel associé au numéro de téléphone, c'est-à-dire que son numéro d'appel est attribué à un autre exploitant de réseau, **caractérisé en ce que** cette information est transmise par l'autre exploitant de réseau à l'appelant concerné pour information et pour décider de la poursuite ou de l'interruption de l'établissement de la liaison.

2. Procédé selon la revendication précédente, **caractérisé en ce que,** si l'on connait les exploitants de réseau, conçus comme exploitants de réseau de téléphonie mobile, des partenaires de communication respectivement concernés, c'est-à-dire leur appartenance au réseau, une décision concernant la poursuite ou l'interruption d'une liaison de communication est donnée à un appelant.

3. Procédé selon la revendication précédente, **caractérisé en ce que,** dans le cas d'une interruption d'une liaison de communication ou de l'établissement d'une liaison, compte tenu des exploitants de réseau des partenaires de communication respectivement concernés, un autre numéro de 1"abonné respectivement souhaité provenant d'un répertoire de téléphone et/ou d'un répertoire d'adresses d'un terminal d'abonné (UE) est sélectionné automatiquement et un nouvel établissement de liaison est démarré avec ce numéro d'appel.

4. Procédé selon l'une quelconque des deux revendications précédentes, **caractérisé en ce que,** avec l'utilisation d'une minuterie, un établissement de liaison est poursuivi automatiquement si l'on n'a pas une interruption explicite.

5. Procédé selon l'une quelconque ou plusieurs des revendications précédentes, **caractérisé en ce qu'**une liaison avec un abonné sélectionné est étudiée au niveau de la présence d'un exploitant de réseau de téléphonie mobile.

6. Procédé selon l'une quelconque ou plusieurs des revendications précédentes, **caractérisé en ce que** l'information est affichée sur un écran de l'appel et/ou est **caractérisée** comme annonce.

7. Procédé selon l'une quelconque ou plusieurs des revendications précédentes, **caractérisé en ce que** l'information est stockée dans un répertoire de téléphone et/ou un répertoire d'adresses, en particulier avec l'indication d'un moment d'appel.

8. Procédé selon la revendication précédente, **caractérisé en ce qu'**une configuration respective d'exploitants de réseau de l'appelant et d'exploitant de réseau de l'appelé concerné est analysée dans une banque de données.

9. Procédé selon l'une quelconque des revendications précédentes, **caractérisé en ce qu'**une évaluation de frais est communiquée à la personne ou aux personnes tenue(s) au paiement.

10. Système qui permet une communication entre au moins deux abonnés, lequel présente des moyens pour la mise en oeuvre d'un procédé selon l'une quelconque ou plusieurs des revendications précédentes.
